# EUROPEAN PATENT SPECIFICATION

(11) **EP 2 784 666 B1**
(45) Date of publication and mention of the grant of the patent: **30.01.2019**
(21) Application number: 14161739.9
(22) Date of filing: 26.03.2014
(51) Int. Cl.: G06F 9/44

(54) **Method and device for displaying service pages for executing applications**
Verfahren und Vorrichtung zum Anzeigen von Seiten zur Ausführung von Anwendungen
Procédé et dispositif pour afficher des pages de service pour exécuter des applications

(30) Priority: 27.03.2013 US 201361805632 P; 12.07.2013 KR 20130082464
(43) Date of publication of application: 01.10.2014
(73) Proprietor: Samsung Electronics Co., Ltd., Suwon-si Gyeonggi-do 443-742 (KR)
(72) Inventor: Park, Yong-gook, Gyeonggi-do (KR); Kang, Nam-wook, Seoul (KR); Bae, Joo-yoon, Seoul (KR); Shin, Eun-mee, Gyeonggi-do (KR); Lee, Keum-koo, Gyeonggi-do (KR); Lee, Hye-won, Gyeonggi-do (KR)
(74) Representative: HGF Limited

(56) References cited:
- WO-A1-2012/032180
- FR-A1- 2 971 069
- US-A1- 2011 167 387

## Description

### RELATED APPLICATIONS

This application claims the benefit of U.S. Provisional Patent Application No. 61/805,632, filed on March 27, 2013, in the U.S. Patent and Trademark Office, and the benefit of Korean Patent Application No. 10-2013-0082464, filed on July 12, 2013, in the Korean Intellectual Property Office.

### BACKGROUND

### 1. Field

One or more exemplary embodiments relate to a method and device for displaying service pages for executing applications. In particular, certain embodiments relate to displaying service pages according to page groups.

### 2. Description of the Related Art

Due to development in multimedia technology and data processing technology, devices are able to execute many applications and to process various types of information. Also, the device is enabled to receive various services from various service providers and to display and execute applications by using various types of launchers.

However, it is difficult for a user of a device to efficiently manage many applications installed in the device, and to effectively select and to use a launcher according to a preference of the user.

Thus, there is a demand for a service page managing technique of the device which allows the user of the device to effectively manage and to use applications installed in the device, according to service providers or launchers.

US20110167387 and WO2012032180 disclose related art.

### SUMMARY

The invention is as set out in the independent claims.

One or more exemplary embodiments include a method and device for displaying a service page for executing an application by grouping service pages having similar attributes and by displaying service pages included in a page group on a home screen.

Additional aspects will be set forth in part in the description which follows and, in part, will be apparent from the description, or may be learned by practice of the presented embodiments.

According to a first aspect of one or more exemplary embodiments, there is provided a method of displaying service pages for executing applications, the method performed by a device and including operations of generating a plurality of page groups by grouping the service pages including objects for executing functions of the applications; in response to a page group being selected from the plurality page groups, setting the service pages of the selected page group, as service pages to be displayed on a home screen of the device; and displaying the service pages included in the page group on the home screen, based on the setting.

When the page group is selected, service pages that are of the service pages not of the selected page group may not be displayed on the home screen.

The service pages included in a page group may be configured to be used by a user of the device in the use of a service provided from a same service provider.

The service pages included in the page group may be supported by a same launcher.

The method may further include operations of generating a plurality of respective cover pages including a plurality of pieces of summary information about the respective page groups; and displaying the cover pages.

The plurality of pieces of summary information may be generated based on a plurality of pieces of information about the applications included in the service pages of the respective page groups, and a plurality of pieces of notification information generated by the applications included in the service pages of the respective page groups.

The operation of displaying the cover pages may include an operation of displaying the cover pages on a lock-screen of the device.

When a cover page is selected from the plurality of cover pages displayed on the lock-screen, the service pages included in a page group that corresponds to the selected cover page may be displayed on the home screen of the device.

The selected cover page may display an icon of an application included in one of the service pages included in the respective page group that corresponds to the selected cover page, and when the icon of the application is selected, the method may further include an operation of executing the application that corresponds to the icon.

The operation of executing the application may include an operation of executing at least one function of the application.

When the page group is selected from the plurality of page groups, the method may further include an operation of installing an application related to the selected page group on the device, and an icon for executing the installed application may be included in one of the service pages included in the selected page group
The method may further include displaying the page groups one at a time before a page group is selected from the plurality of page groups.

A page group from the plurality of page groups may be generated according to user input.

A page group from the plurality of page groups may be generated by using a template. The template may be provided by a template server.

According to a second aspect of one or more exemplary embodiments, there is provided a device that displays service pages for executing applications, the device including a controller configured to generate a plurality of page groups by grouping the service pages including objects for executing preset functions of the applications, and when a page group is selected from the plurality of page groups, setting the service pages included in the page group, as service pages to be displayed on a home screen of the device; and a display configured to display the service pages included in the page group on the home screen, based on the setting.

When the page group is selected from the plurality of page groups, service pages that are not of the selected page group may not be displayed on the home screen.

The service pages included in the page group selected from the plurality of page groups may be used by a user of the device in the use of a service provided from a same service provider.

The service pages included in the page group selected from the plurality of page groups may be supported by a same launcher.

The controller may generate a plurality of cover pages including a plurality of pieces of summary information about respective page groups from the plurality of page groups, and the display may display the cover pages.

The plurality of pieces of summary information may be generated based on a plurality of pieces of information about the applications included in the service pages of the respective page groups, and a plurality of pieces of notification information generated by the applications included in the service pages of the respective page groups.

The display may display the cover pages on a lock-screen of the device.

When a cover page is selected from the plurality of cover pages displayed on the lock-screen, the service pages included in a page group that corresponds to the selected cover page may be displayed on the home screen of the device.

The selected cover page may display an icon of an application included in one of the service pages included in the respective page group that corresponds to the selected cover page, and when the icon of the application is selected, the controller may execute the application that corresponds to the icon.

The controller may execute at least one function of the application.

When the page group is selected, the controller may install an application related to the page group on the device, and an icon for executing the installed application may be included in a service page included in the selected page group.

The controller may control the display to display the page groups one at a time.

A page group from the plurality of page groups may be generated according to user input.

A page group from the plurality of page groups may be generated by using a template. The template may be provided by a template server.

According to a third aspect of one or more exemplary embodiments, there is provided a non-transitory computer-readable recording medium having recorded thereon a program which, when executed by a computer, performs a method in accordance with any one of the above-described aspects.

Another aspect of the present disclosure provides a computer program comprising instructions arranged, when executed, to implement a method in accordance with any one of the above-described aspects.

Various respective aspects and features of the present disclosure are defined in the appended claims.

It is an aim of certain embodiments of the present disclosure to solve, mitigate or obviate, at least partly, at least one of the problems and/or disadvantages associated with the prior art. Certain embodiments aim to provide at least one of the advantages described below.

### BRIEF DESCRIPTION OF THE DRAWINGS

These and/or other aspects will become apparent and more readily appreciated from the following description of exemplary embodiments, taken in conjunction with the accompanying drawings in which:
FIG. 1 illustrates an example in which a device displays service pages according to a selected page group according to an exemplary embodiment;
FIG. 2 illustrates an example in which a cover page, a service page, and an application page are displayed on a lock-screen, a home screen, and an application screen, respectively, according to an exemplary embodiment;
FIG. 3 illustrates a relation among a cover page, a service page, and an application page, according to an exemplary embodiment;
FIG. 4 is a flowchart of a method of generating page groups of service pages and displaying the service pages on a screen of the device, which is performed by the device, according to an exemplary embodiment;
FIG. 5 illustrates an example in which a page group is generated according to a service provider or a launcher, and service pages included in the page group are displayed on a screen of the device, according to an exemplary embodiment;
FIG. 6 is a timing diagram of a method of generating a page group by using service pages provided from a service provider, which is performed by the device, according to an exemplary embodiment;
FIG. 7 is a flowchart of a method of generating a service page and a page group, which is performed by the device, according to an exemplary embodiment;
FIG. 8 is a timing diagram of a method of generating a service page and a page group by accessing a page providing server, which is performed by the device, according to an exemplary embodiment;
FIGs. 9A-9C illustrate an example in which the device generates a service page by editing a template, according to an exemplary embodiment;
FIGs. 10A-10B illustrate a service page, according to an exemplary embodiment;
FIGs. 11A-11C illustrate a service page, according to another exemplary embodiment;
FIG. 12 is a flowchart of a method displaying a cover page and a service page, which is performed by the device, according to an exemplary embodiment;
FIG. 13 illustrates an example in which cover pages are displayed one-by-one on a lock-screen, and a service page corresponding to a cover page selected from the cover pages is displayed on a home screen, according to an exemplary embodiment;
FIG. 14 illustrates an example in which a plurality of cover pages are displayed together on a lock-screen, and a service page corresponding to a cover page selected from the cover pages is displayed on a home screen, according to an exemplary embodiment;
FIG. 15 is a flowchart of a method of generating a cover page, which is performed by the device, according to an exemplary embodiment;
FIG. 16 illustrates an example of a cover page, according to an exemplary embodiment;
FIG. 17 illustrates an example of a cover page, according to another exemplary embodiment;
FIG. 18 is a flowchart of a method of executing an application by selecting an icon on a service page, which is performed by the device, according to an exemplary embodiment;
FIG. 19 illustrates an example in which a user of the device selects an icon on a service page, according to an exemplary embodiment;
FIG. 20 is a flowchart of a method of executing an application by selecting an icon on a cover page, which is performed by the device, according to an exemplary embodiment;
FIG. 21 illustrates an example in which a user of the device selects an icon on a cover page, according to an exemplary embodiment;
FIG. 22 is a flowchart of a method of backing up service pages, according to an exemplary embodiment;
FIG. 23 is a block diagram of the device, according to an exemplary embodiment; and
FIG. 24 is a block diagram of the device, according to another exemplary embodiment.

### DETAILED DESCRIPTION

Hereinafter, one or more exemplary embodiments will be described more fully with reference to the accompanying drawings. However, the exemplary embodiments may be embodied in many different forms and should not be construed as being limited to the exemplary embodiments set forth herein; rather, these exemplary embodiments are provided so that this disclosure will be thorough and complete, and will fully convey the concept of the exemplary embodiments to those of ordinary skill in the art. In the following description, well-known functions or constructions will not be described in detail so as not to obscure the exemplary embodiments with unnecessary detail. Also, throughout the specification, like reference numerals in the drawings denote like elements.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Throughout the specification, it will also be understood that when an element is referred to as being "connected to" another element, it can be directly connected to the other element, or electrically connected to the other element while intervening elements may also be present.

Throughout the specification, the term "lock-screen" indicates a software screen for unlocking a device. When the device receives a user input with respect to the lock-screen, the device may unlock.

Also, the term "home screen" indicates a main screen that is from among software screens of the device and that controls an operation of the device or execution of an application from among applications installed in the device and control of the application. As a non-limiting example, the operation may be a preset operation and the application may be a preset application. The home screen may display icons of some applications from among the applications installed in the device, application execution results, etc.

Also, the term "application screen" indicates a software screen whereon a list of applications installed in the device is displayed. The application screen may display icons of all applications installed in the device. Also, a user may select an icon displayed on the application screen so as to execute an application of the selected icon or to move the selected icon to the home screen.

Throughout the specification, the device provides the lock-screen, the home screen, and the application screen but exemplary embodiments are not limited thereto. The device may provide only the lock-screen and the home screen.

Also, the term "service page" indicates a page for displaying objects for executing a function of the device and a function of an application installed in the device. The service page may display objects for executing some functions of the device and some applications of the device. Each object may include an image, a video, and a text, and as a non-limiting example, may include an icon of the application, an execution window of the application, and a widget. A plurality of service pages may be displayed on the home screen. Also, based on a swipe input by the user with respect to the home screen, the service pages may be sequentially displayed on the home screen. As a non-limiting example, the function may be a preset function of the application.

Also, the term "page group" indicates a group of service pages having similar attributes. A service provider may provide service pages to the device, which are for using a service of the service provider, and the device may generate a page group by grouping the service pages received from the service provider. Also, the device may generate page groups by grouping service pages that are supported by the same launcher, according to launchers. However, exemplary embodiments are not limited thereto.

Also, the term "cover page" indicates a page for displaying summary information of service pages included in one page group. The cover page may display, but is not limited to, execution information of an application that is executed in a service page included in a page group, an identification (ID) value of a service provider that provides the service pages, and an ID value of a launcher that supports the service pages. The cover page may be displayed on the lock-screen.

The application page displays a list of applications installed in the device. The application page may display a list of all applications installed in the device. As a non-limiting example, the application page may display icons of the applications installed in the device.

Throughout the specification, the term "service provider" may indicate a server or an apparatus for providing a service. The service may include, but is not limited to, a social networking service (SNS), a content providing service, a message providing service, a content sharing service, a broadcasting service, a game service, and a portal information providing service. Also, as a non-limiting example, the service may be predetermined.

Reference will now be made in detail to exemplary embodiments, examples of which are illustrated in the accompanying drawings. Expressions such as "at least one of," when preceding a list of elements, modify the entire list of elements and do not modify the individual elements of the list.

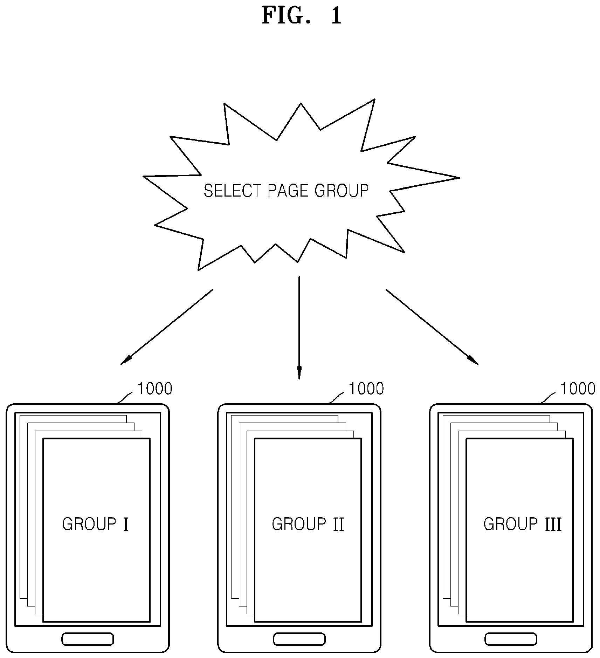

FIG. 1 illustrates an example in which a device 1000 displays service pages according to a selected page group according to an exemplary embodiment.

Referring to FIG. 1, when a user of the device 1000 selects a page group,
the device 1000 may display service pages included in the selected page group on a screen of the device 1000.

As a non-limiting example, when the user of the device 1000 selects a page group I, the device 1000 may display service pages included in the page group I on a home screen of the device 1000. In this case, the service pages included in the page group I may be sequentially displayed one-by-one on the screen of the device 1000 in response to a swipe input by the user. However, this is just an example and multiple service pages in page group I may be displayed at a time. When the user selects the page group I, service pages included in other groups may not be displayed on the screen of the device 1000.

As a non-limiting example, when the user of the device 1000 selects a page group II, the device 1000 may display service pages included in the page group II on the home screen of the device 1000. Also, as a non-limiting example, when the user of the device 1000 selects a page group III, the device 1000 may display service pages included in the page group III on the home screen of the device 1000.

The device 1000 may include, but is not limited to, a smart phone, a smart TV, a mobile phone, a tablet personal computer (PC), a personal digital assistant (PDA), a laptop, a media player, a global positioning system (GPS) apparatus, and other mobile or non-mobile apparatuses.

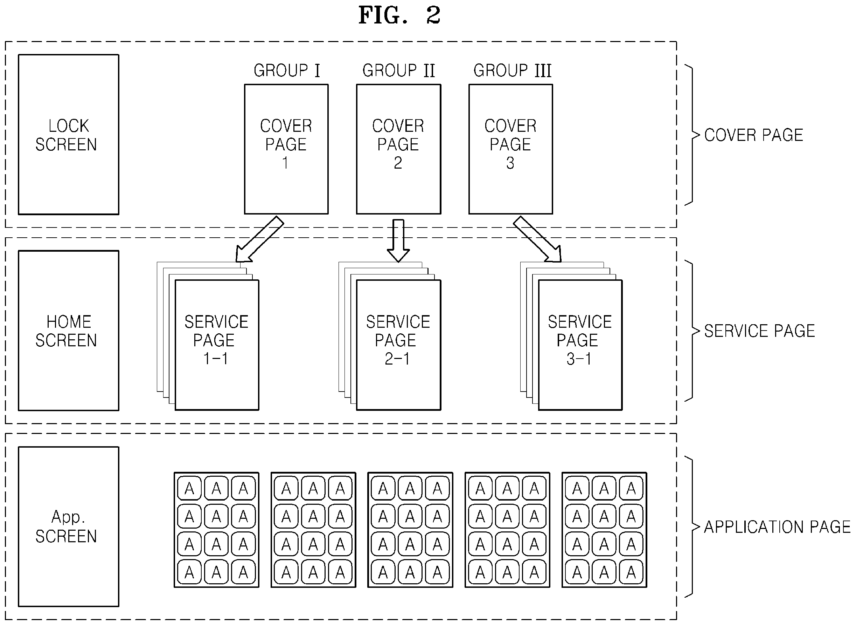

FIG. 2 illustrates an example in which a cover page, a service page, and an application page are displayed on a lock-screen, a home screen, and an application screen, respectively, according to an exemplary embodiment.

Referring to FIG. 2, a software screen of the device 1000 may include the lock-screen, the home screen, and the application screen. Also, at least one cover page may be displayed on the lock-screen of the device 1000, at least one service page may be displayed on the home screen of the device 1000, and at least one application page may be displayed on the application screen of the device 1000.

In more detail, a cover page 1, a cover page 2, and a cover page 3 may be displayed on the lock-screen of the device 1000. The cover page 1 may correspond to a page group I, the cover page 2 may correspond to a page group II, and the cover page 3 may correspond to a page group III. Also, the cover page 1 may include summary information of service pages included in the page group I, the cover page 2 may include summary information of service pages included in the page group II, and the cover page 3 may include summary information of service pages included in the page group III.

When a cover page is selected on the lock-screen of the device 1000, the device 1000 may be unlocked, and service pages that match the selected cover page may be displayed on the home screen of the device 1000. As a non-limiting example, the cover page may be a predetermined cover page. As a non-limiting example, when the cover page 1 is selected on the lock-screen of the device 1000, the device 1000 may be unlocked, and service pages 1-1, 1-2, ..., 1-n included in the page group I may be displayed on the home screen of the device 1000. Similarly, when the cover page 2 is selected on the lock-screen of the device 1000, the device 1000 may be unlocked, and service pages 2-1, 2-2, ···, 2-n of the page group II, and when the cover page 3 is selected on the lock-screen of the device 1000, the device 1000 may be unlocked, and service pages 3-1, 3-2, ···, 3-n of the page group III may not be displayed on the home screen.

Also, application pages may be displayed on the application screen of the device 1000. Icons of applications installed in the device 1000 may be displayed on the application pages.

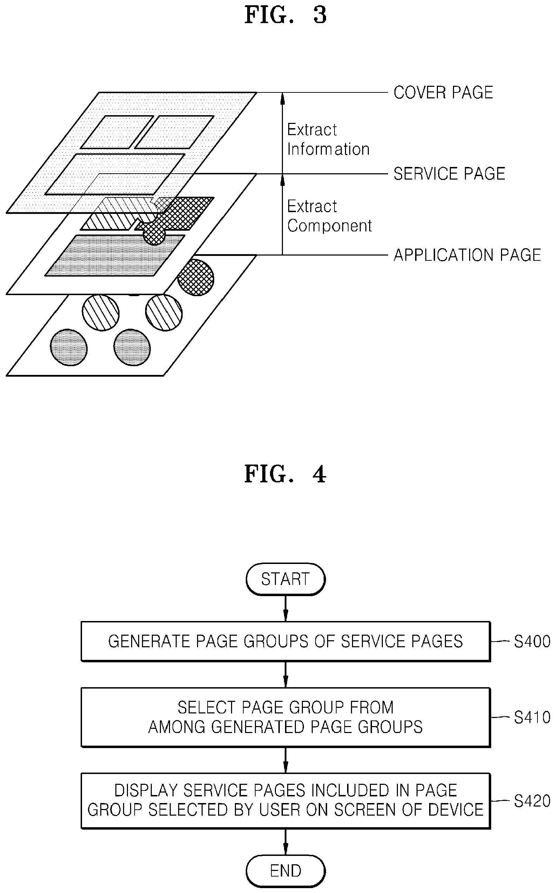

FIG. 3 illustrates a relation among a cover page, a service page, and an application page, according to an exemplary embodiment.

Referring to FIG. 3, the service page may include some components extracted from the application page. As a non-limiting example, an application may be selected from among applications included in the application page, and at least one or all functions of the selected application may be selected. Also, objects for executing the selected functions of the selected application may be included in the service page. Also, functions of an application may be modularized, and in this regard, a functional module may be selected from among a plurality of functional modules of the application, and the selected functional module may be included in the service page. As a non-limiting example, the functional module may be a predetermined functional module.

Also, information extracted from the service page may be included in the cover page. As a non-limiting example, information about a title of a page group including the service page, a name of the application executed in the service page, a function of the application, and an execution result of the function may be included in the cover page.

FIG. 4 is a flowchart of a method of generating page groups of service pages and displaying the service pages on a screen of the device 1000, which is performed by the device 1000, according to an exemplary embodiment.

In operation S400, the device 1000 generates the page groups of the service pages. The device 1000 may generate page groups by grouping service pages having similar attributes. The device 1000 may generate page groups by grouping service pages, which are received from service providers, according to the service providers. As a non-limiting example, the device 1000 may generate a first page group by grouping service pages received from a first service provider, and may generate a second page group by grouping service pages received from a second service provider.

Also, the device 1000 may generate a page group by grouping service pages that are supported by a same launcher. As a non-limiting example, the device 1000 may generate a third page group by grouping service pages supported by a first launcher, and may generate a fourth page group by grouping service pages supported by a second launcher.

A user of the device 1000 may generate a service page by selecting a user-desired application and at least one function of the selected user-desired application and then by including objects for executing the selected user-desired application and the selected function in the service page. The device 1000 may generate a fifth page group by grouping service pages that are generated by the user.

In operation S410, the device 1000 selects a page group from among the generated page groups. The device 1000 may display a list of the generated page groups and may select the page group, based on a user input. As a non-limiting example, the page group may be a predetermined page group.

As a non-limiting example, the device 1000 may display group titles of the generated page groups, and based on a user input with respect to selecting one of the displayed group titles, the device 1000 may select a page group that matches the selected group title.

The device 1000 may display cover pages that match the generated page groups, respectively, and based on a user input with respect to selecting one of the cover pages, the device 1000 may select a page group that matches the selected cover page. In this case, the cover pages may be displayed on the lock-screen of the device 1000 but one or more exemplary embodiments are not limited thereto.

In operation S420, the device 1000 displays service pages, which are included in the page group selected by the user, on the screen of the device 1000. The device 1000 may set the service pages included in the selected page group, as target service pages to be displayed on the home screen of the device 1000. Then, the device 1000 may display the service pages included in the selected page group on the home screen of the device 1000. The device 1000 may not display service pages included in non-selected page groups, and may display only the service pages included in the selected page group. Also, the device 1000 may display the service pages included in the selected page group on the home screen, and the device 1000 may sequentially display service pages one-by-one on the home screen. The sequentially displaying the service pages may be based on a user input, such as by a swipe on a touch screen. Multiple service pages may be displayed on the home screen at a given time.

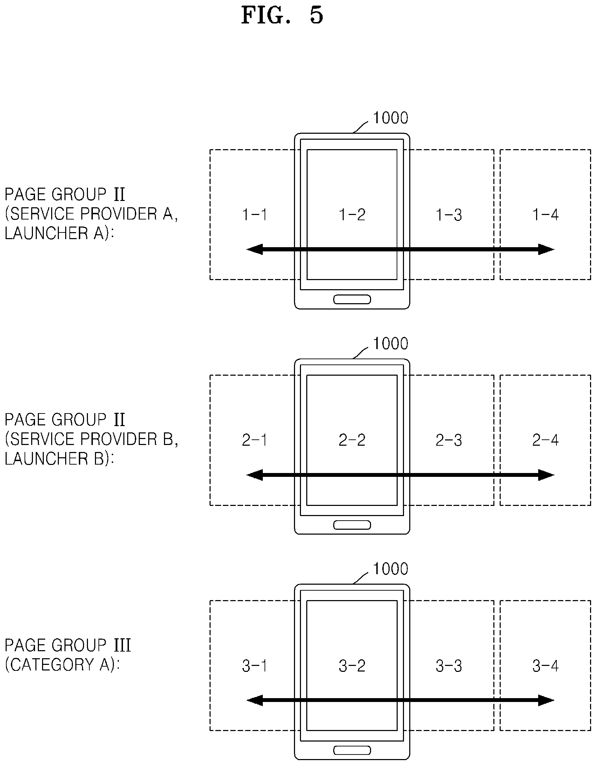

FIG. 5 illustrates an example in which a page group is generated according to a service provider or a launcher, and service pages included in the page group are displayed on a screen of the device 1000, according to an exemplary embodiment.

Referring to FIG. 5, page groups may be generated according to the service provider, the launcher, and a category, respectively. In more detail, a page group I may be a group of service pages 1-1, 1-2, 1-3 and 1-4 that are provided by a service provider A. Also, the service pages 1-1, 1-2, 1-3 and 1-4 included in the page group I may be supported by a launcher A. Also, the service pages 1-1, 1-2, 1-3 and 1-4 may be displayed on a home screen of the device 1000. The service page 1-1 may be displayed on the home screen of the device 1000, and the service pages 1-2, 1-3 and 1-4 may be sequentially displayed. The sequentially displaying the service pages may be based on a user input, such as by a swipe on a touch screen. Multiple service pages may be displayed on the home screen at a given time.

Also, a page group II may be a group of service pages 2-1, 2-2, 2-3 and 2-4 that are provided by a service provider B. Also, the service pages 2-1, 2-2, 2-3 and 2-4 included in the page group II may be supported by a launcher B. Also, the service pages 2-1, 2-2, 2-3 and 2-4 may be displayed on the home screen of the device 1000. The service page 2-1 may be displayed on the home screen of the device 1000, and then based on a swipe input by a user, the service pages 2-2, 2-3 and 2-4 may be sequentially displayed.

Also, a page group III may be a group of service pages 3-1, 3-2, 3-3 and 3-4 that are generated by a user. The user may generate page groups according to categories, respectively, and the service pages 3-1, 3-2, 3-3 and 3-4 may be included in a page group of a category A. The service pages 3-1, 3-2, 3-3 and 3-4 may be displayed on the home screen of the device 1000. The service page 3-1 may be displayed on the home screen of the device 1000, and then based on a swipe input by a user, the service pages 3-2, 3-3 and 3-4 may be sequentially displayed.

In a case where the service pages 1-1, 1-2, 1-3 and 1-4 included in the page group I are displayed on the home screen, the service pages 2-1, 2-2, 2-3 and 2-4 included in the page group II and the service pages 3-1, 3-2, 3-3 and 3-4 included in the page group III may not be displayed on the home screen.

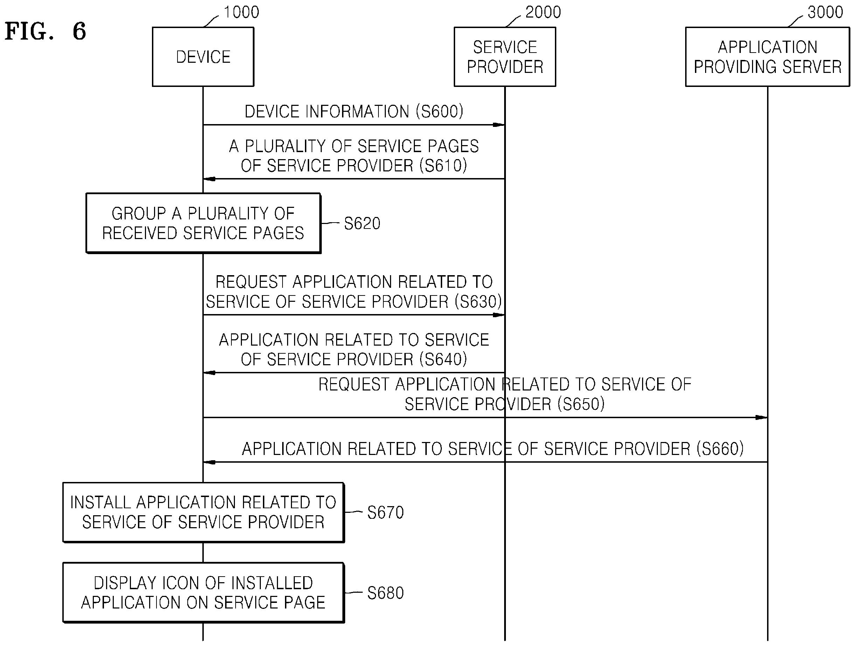

FIG. 6 is a flowchart of a method of generating a page group by using service pages provided from a service provider 2000, which is performed by the device 1000, according to an exemplary embodiment.

In operation S600, the device 1000 transmits device information to the service provider 2000. The device information may include at least one of a model name of the device 1000, a name of an operating system (OS) installed in the device 1000, a version of the OS, an identification (ID) value of a user of the device 1000, a name of an application installed in the device 1000, and a version of the application.

In operation S610, the service provider 2000 transmits a plurality of service pages to the device 1000, which are for using a service of the service provider 2000. The service provider 2000 may extract the service pages for using the service of the service provider 2000 from a database (DB), and may transmit the extracted service pages to the device 1000. The service provider 2000 may extract from the DB the service pages having a format supportable by the device 1000, based on the device information.

Also, the service provider 2000 may generate service pages to be provided to the device 1000, in consideration of a type of the device 1000, a type of the OS installed in the device 1000, and the application installed in the device 1000. Each of the service pages provided by the service provider 2000 may include, as non-limiting examples, an execution icon of the application for using the service of the service provider 2000, and link information for downloading the application for using the service of the service provider 2000.

In operation S620, the device 1000 groups the received service pages. The device 1000 may generate a page group by grouping the service pages received from the service provider 2000. Also, the device 1000 may match the generated page group and an ID value of the service provider 2000.

In operation S630, the device 1000 requests the service provider 2000 for the application related to the service of the service provider 2000. The service page received from the service provider 2000 may include the link information (e.g., a link address) for downloading the application for using the service of the service provider 2000. Also, the device 1000 may request the service provider 2000 for the application, by using the link information included in the service page received from the service provider 2000. As a non-limiting example, when a user of the device 1000 selects an icon on the service page displayed on a home screen of the device 1000, the device 1000 may request the service provider 2000 for the application. However, one or more exemplary embodiments are not limited thereto and thus, when the service page of the service provider 2000 is displayed on the home screen of the device 1000, the device 1000 may automatically request the service provider 2000 for the application. As a non-limiting example, the icon may be a predetermined icon.

In operation S640, the service provider 2000 transmits the application related to the service of the service provider 2000 to the device 1000. In response to the request from the device 1000, the service provider 2000 may transmit to the device 1000 an installation file of the application requested by the device 1000.

In operation S650, the device 1000 requests an application providing server 3000 for the application related to the service of the service provider 2000. The service page received from the service provider 2000 may include the link information (e.g., the link address) for downloading the application for using the service of the service provider 2000. Also, the device 1000 may request the application providing server 3000 for the application, by using the link information included in the service page received from the service provider 2000. As a non-limiting example, when the user of the device 1000 selects the icon on the service page displayed on the home screen of the device 1000, the device 1000 may request the application providing server 3000 for the application. However, one or more exemplary embodiments are not limited thereto and thus, when the service page of the service provider 2000 is displayed on the home screen of the device 1000, the device 1000 may automatically request the application providing server 3000 for the application.

Also, when the user of the device 1000 selects the icon on the service page displayed on the home screen of the device 1000, a user interface (e.g., a menu for selecting and purchasing an application) provided by the application providing server 3000 may not be displayed on a screen, and the device 1000 may download the application from the application providing server 3000.

The device 1000 may log in the service provider 2000 and the application providing server 3000 by using one ID, and may request the service provider 2000 and the application providing server 3000 for the application.

In operation S660, the application providing server 3000 transmits the application related to the service of the service provider 2000 to the device 1000. In response to the request from the device 1000, the application providing server 3000 may transmit to the device 1000 the installation file of the application requested by the device 1000.

In operation S670, the device 1000 installs the application related to the service of the service provider 2000. The device 1000 may execute the installation file of the application received in operation S640 and operation S660, and thus may install the application in the device 1000.

In operation S680, the device 1000 displays an icon of the installed application on the service page of the service provider 2000. Thus, when the service page provided from the service provider 2000 is displayed on the home screen of the device 1000, the application for using the service of the service provider 2000 may be effectively installed in the device 1000.

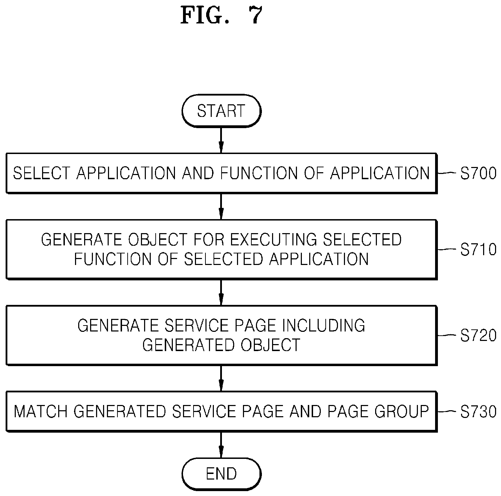

FIG. 7 is a flowchart of a method of generating a service page and a page group, which is performed by the device 1000, according to an exemplary embodiment.

In operation S700, the device 1000 selects an application and a function of the application which are to be included in the service page. As a non-limiting example, the function may be a predetermined function. The device 1000 may select one or more applications installed in the device 1000. As a non-limiting example, the device 1000 may select applications A and B from among applications A, B, and C installed in the device 1000.

Also, the device 1000 may select at least one function of the selected application. In this case, the functions of the application may be modularized, and the device 1000 may select at least one functional module of the application. As a non-limiting example, in a case where the application A includes a functional module a-1, a functional module a-2, and a functional module a-3, the device 1000 may select the functional module a-1.

In operation S710, the device 1000 generates an object for executing the selected function of the selected application. As a non-limiting example, when the device 1000 selects the applications A and B, and then selects the functional module a-1 of the application A, the device 1000 may generate an icon for executing the functional module a-1 of the application A and an icon for executing the application B.

In operation S720, the device 1000 generates the service page including the object. As a non-limiting example, when the device 1000 selects the applications A and B, and then selects the functional module a-1 of the application A, the device 1000 may include the icon for executing the functional module a-1 of the application A and the icon for executing the application B in the service page.

In operation S730, the device 1000 matches the service page and a page group. Since the device 1000 matches the service page and the page group, when the matched page group is selected, the service page may be displayed on a home screen of the device 1000.

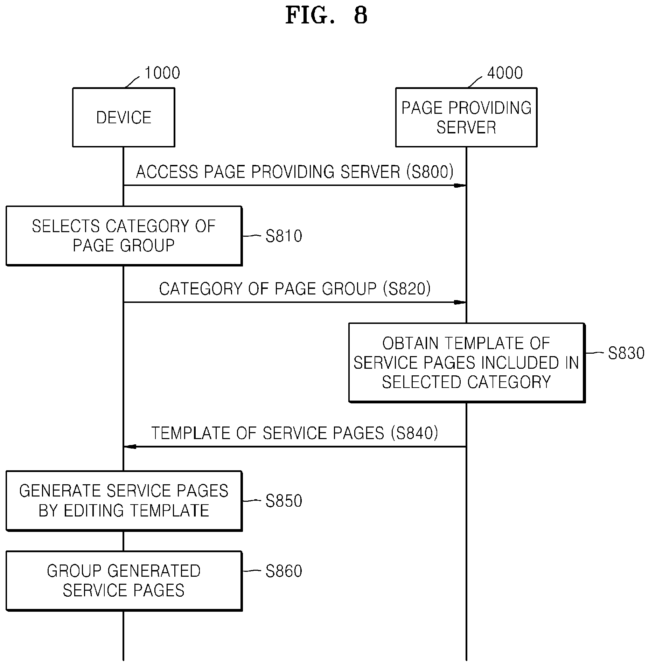

FIG. 8 is a timing diagram of a method of generating a service page and a page group by accessing a page providing server 4000, which is performed by the device 1000, according to an exemplary embodiment.

In operation S800, the device 1000 accesses the page providing server 4000. The page providing server 4000 may be a server of a market for selling templates that are used in generating service pages.

In operation S810, the device 1000 selects a category of a page group, and in operation S820, the device 1000 provides a value of the selected category to the page providing server 4000. Categories of the page group may include search, communication, studio, entertainment, shopping, and schedule.

The category of 'search' may match a service page including an application that searches for data. The application included in the service page matching the category of 'search' may include an application searching through a portal site and searching for data stored in an SNS server. Also, the application included in the service page matching the category of 'search' may include an application that provides a location-based search service.

The category of 'communication' may match a service page including an application that provides a communication service. The application included in the service page matching the category of 'communication' may include an application for making a call, an application for exchanging a message, or an application for an SNS service.

The category of 'studio' may match a service page including an application that provides an image and video generation service. The application included in the service page matching the category of 'studio' may include an application for capturing an image, an application for making a video, an application for editing an image, an application for editing a video, an application for sharing an image, or an application for sharing a video.

The category of 'entertainment' may match a service page including an application that reproduces content. The application included in the service page matching the category of 'entertainment' may include an application for playing music, or an application for reproducing a movie.

The category of 'schedule' may match a service page including an application that provides a schedule managing service. The application included in the service page matching the category of 'schedule' may include a calendar application.

However, types of the category and types of the application included in the service page matching the category are not limited thereto.

In operation S830, the page providing server 4000 obtains a template of service pages included in the selected category. The page providing server 4000 may separately store templates according to the categories. The page providing server 4000 may check the category selected by the device 1000 and may extract the template included in the checked category from a DB.

In operation S840, the page providing server 4000 provides the template of the service page to the device 1000. The page providing server 4000 may provide, to the device 1000, the template included in the category selected by the device 1000 and a user interface for editing the template.

In operation S850, the device 1000 may generate service pages by editing the template. The device 1000 may select an application and at least one function of the application which are to be included in the template, by using the user interface provided from the page providing server 4000.

In operations S840 and S850, the device 1000 receives the template and the UI for editing the template from the page providing server 4000, and edits the template by using the received UI, but one or more exemplary embodiments are not limited thereto.

While the device 1000 is connected to the page providing server 4000, the device 1000 may use the user interface for editing the template. In this case, the device 1000 may edit the template while the device 1000 is connected to the page providing server 4000, and after the device 1000 completes editing the template, the device 1000 may receive the edited template from the page providing server 4000.

In operation S860, the device 1000 groups the generated service pages. The device 1000 may match a page group and the service pages generated by editing the templates, and thus may generate the page group. As a non-limiting example, the device 1000 may match a category and the service page generated by editing the template. As a non-limiting example, the category may be a predetermined category.

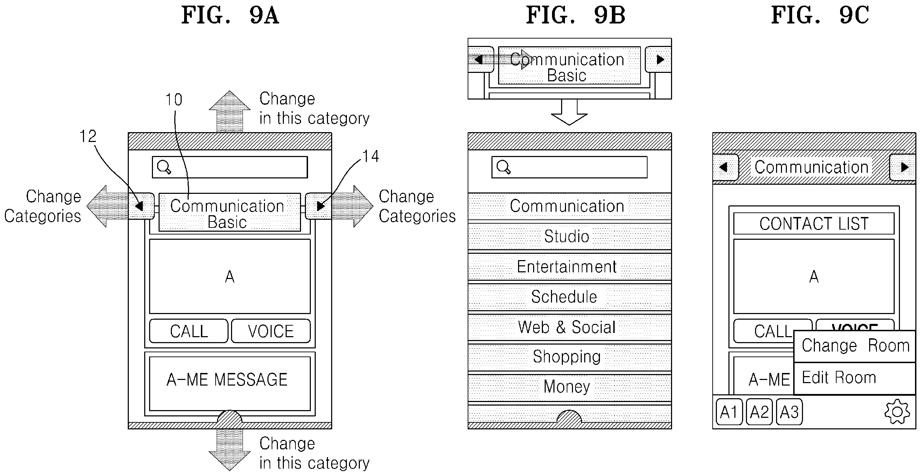

FIGs. 9A to 9C illustrate an example in which the device 1000 generates a service page by editing a template, according to an exemplary embodiment.

Referring to FIG. 9A, when the device 1000 accesses the page providing server 4000, a template for generating a page group and a service page may be displayed on a screen of the device 1000. Also, when a user of the device 1000 selects a button 10, as illustrated in FIG. 9B, a category list for selecting a category may be displayed. The user may select a category from the category list.

As a non-limiting example, when the user selects a category 'communication', as illustrated in FIG. 9C, a template related to the category 'communication' may be displayed on the screen of the device 1000. The device 1000 may edit the template of FIG. 9C based on a user input, and thus may generate a service page. The device 1000 may record a text to the template and may insert an image into the template. Also, the device 1000 may match a function of the device or at least one function of an application and a button included in the template.

When the user selects a button 12 and a button 14 on the template of FIG. 9A, a template of a different category may be displayed on the screen of the device 1000.

When a user input involving vertically performing a swipe on the template of FIG. 9A is received, the device 1000 may display another template in the category 'communication' on the screen.

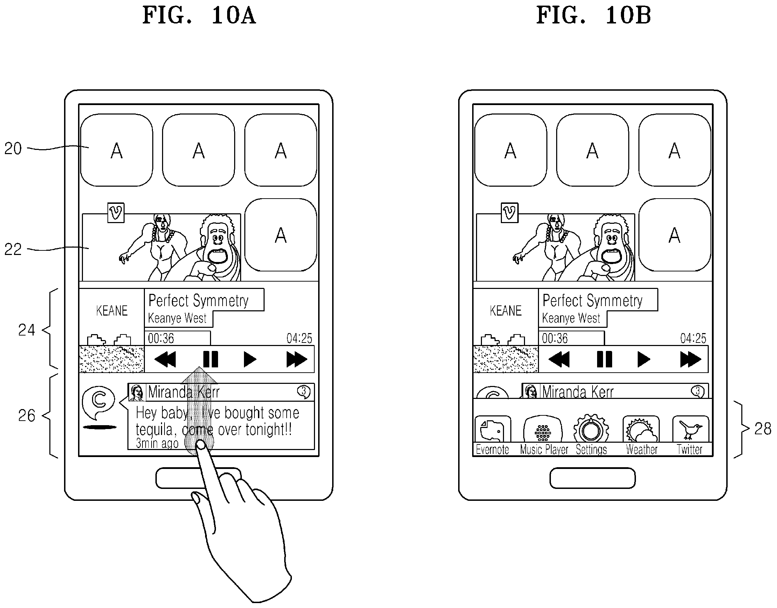

FIGs. 10A and 10B illustrate a service page, according to an exemplary embodiment.

As illustrated in FIG. 10A, the service page according to the exemplary embodiment may include an object that matches an application or at least one function of the application. As a non-limiting example, the application may be a predetermined application.

As a non-limiting example, the service page may include an icon 20 for executing the application or retrieving information. The icon 20 may function to activate an operation of the application. Also, the icon 20 may function to retrieve the at least one function of the application and to execute the retrieved at least one function. In this case, the application includes a plurality of functional modules, and when the icon 20 is selected, a corresponding functional module of the functional modules may be executed. As a non-limiting example, the functional module may be a preset functional module. Also, the icon 20 may function to receive and display information on the World Wide Web (hereinafter, the web). As a non-limiting example, the information may be predetermined information.

As a non-limiting example, the service page may include a window 22 for displaying information that is collected in real-time from the web. On the window 22, content collected from a predetermined website may be updated in real-time and may be displayed. As a non-limiting example, the content may be preset content. As a non-limiting example, the window 22 may display in real-time broadcasting content received from a broadcasting channel. Also, the window 22 may display a partial area of an entire area of a predetermined webpage, which is selected by the user.

The service page may include a window 24 for controlling a predefined function with respect to an application. As a non-limiting example, the window 24 may be set only to perform a music playback control function of various functions of a music reproduction application, and the device 1000 may dispose the window 24 on a partial area of the service page. The window 24 may include a plurality of buttons for controlling a predefined function.

The service page may include a window 26 for displaying an execution result with respect to a partial area of an executed screen of an application, which is designated by the user. As a non-limiting example, the user may select a partial area of an executed screen of a message transmission application, and the device 1000 may display an execution result on the window 26, wherein the execution result is displayed on the partial area selected by the user and is from among execution results of the message transmission application.

Types, formats, functions, and data of objects configuring the service page may be customized according to a specification of the device 1000 and preferences of the user.

As illustrated in FIG. 10A, when the device 1000 receives a user input with respect to performing a swipe from a lower portion of the screen of the device 1000 toward an upper portion, as illustrated in FIG. 10B, a tray 28 including a list of common-use applications may be displayed on the screen of the device 1000. The common-use applications may be displayed on the screen of the device 1000, regardless of a page group of service pages displayed on the screen of the device 1000. As a non-limiting example, the common-use applications may be the applications most frequently used by the user, regardless of the page group.

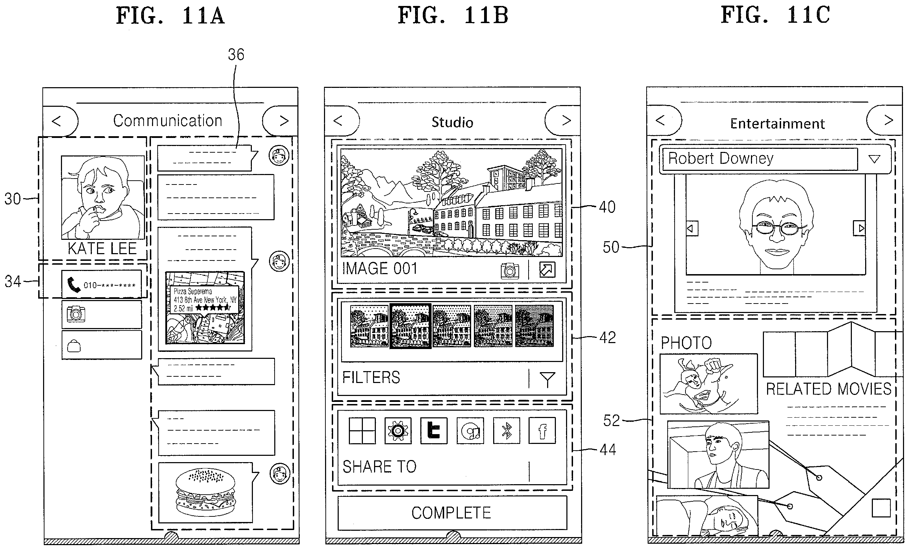

FIGs. 11A to 11C illustrate a service page, according to another exemplary embodiment.

As illustrated in FIG. 11A, a service page included in a category 'communication' may include an area 30 where a name and a photo of another user who is a communication target are displayed, an area 36 where messages and a plurality of pieces of content exchanged with the other user are displayed, and an area 34 where a button for making a call with the other user is displayed.

As illustrated in FIG. 11B, a service page included in a category 'studio' may include an area 40 where an image is displayed, an area 42 where tools for editing an image are displayed, and an area 44 where buttons for transmitting an image to another device 1000 are displayed.

As illustrated in FIG. 11C, a service page included in a category 'entertainment' may include an area 50 where a name and a photo of an actor are displayed, and an area 52 where a filmography of the actor and articles related to the actor are displayed.

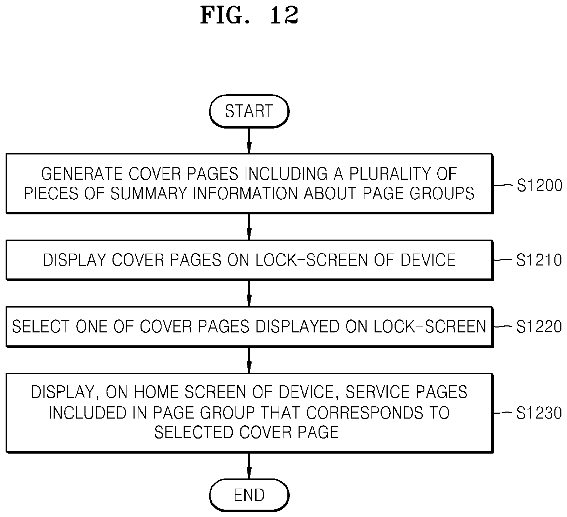

FIG. 12 is a flowchart of a method displaying a cover page and a service page, which is performed by the device 1000, according to an exemplary embodiment.

In operation S1200, the device 1000 generates cover pages including a plurality of pieces of summary information about page groups. In order to generate a cover page with respect to a page group, the device 1000 may extract various types of information from service pages included in the page group. Also, the device 1000 may include the extracted information in the cover page.

The device 1000 may include information about elements that configure a service page in the cover page. The information about elements that configure the service page may include an application included in the service page, a particular function of the application that is executed via the service page, and information about a widget displayed on the service page.

Also, the device 1000 may extract notification information that is provided via the service page. When the notification information is received via the application or the widget included in the service page, the device 1000 may display the notification information on the cover page.

The device 1000 may extract a list of applications that are frequently used by the user via the service page, and may include icons of the frequently used applications in the cover page. Also, the device 1000 may determine a current status of the device 1000 and may include a list of applications related to the current status in the cover page.

The device 1000 may display a current state of an application that is most-recently used by the user on the cover page, and may include an icon of the most-recently used application in the cover page.

In operation S1210, the device 1000 displays cover pages on a lock-screen of the device 1000. The device 1000 may sequentially display the cover pages one-by-one on the lock-screen. As a non-limiting example, based on a swipe input of the user, a next cover page of a cover page that is currently displayed on the lock-screen may be displayed on the lock-screen. The device 1000 may display the cover pages together on the lock-screen. As a non-limiting example, the lock-screen may be divided into a plurality of areas, and then the cover pages may be displayed in the plurality of areas, respectively.

In operation S1220, the device 1000 selects one of the cover pages displayed on the lock-screen. Based on a touch input by the user, the device 1000 may select one of the cover pages displayed on the lock-screen.

In operation S1230, the device 1000 displays on a home screen of the device 1000 service pages included in a page group that corresponds to the selected cover page. As a non-limiting example, when the device 1000 selects a cover page I, the service pages 1-1, 1-2, 1-3 and 1-4 included in the page group I (refer to FIG. 5) corresponding to the cover page I may be displayed on the home screen of the device 1000.

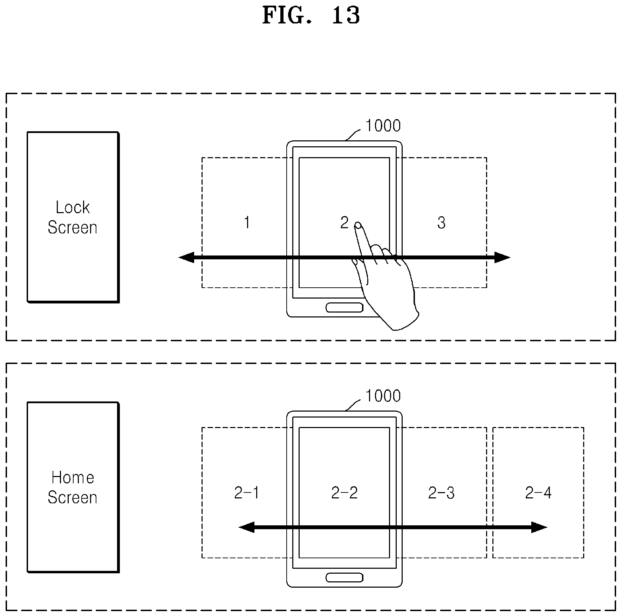

FIG. 13 illustrates an example in which cover pages are displayed one-by-one on a lock-screen, and service pages corresponding to a cover page selected from the cover pages is displayed on a home screen, according to an exemplary embodiment.

Referring to FIG. 13, while a cover page 2 is displayed on the lock-screen of the device 1000, when a swipe input of a user is received, the device 1000 may display a cover page 1 or a cover page 3 on the lock-screen.

When the user selects the cover page 2 displayed on the lock-screen of the device 1000, the device 1000 is unlocked so that the device 1000 may proceed to the home screen. Also, service pages 2-1, 2-2, 2-3 and 2-4 may be sequentially displayed on the home screen of the device 1000.

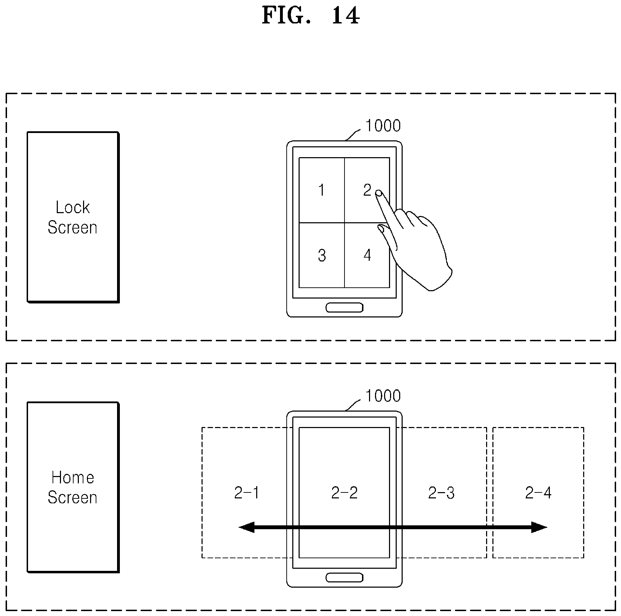

FIG. 14 illustrates an example in which a plurality of cover pages are displayed together on a lock-screen, and a service page corresponding to a cover page selected from the cover pages is displayed on a home screen, according to an exemplary embodiment.

Referring to FIG. 14, a cover page 1, a cover page 2, a cover page 3, and a cover page 4 may be displayed together on the lock-screen of the device 1000. The lock-screen of the device 1000 may be divided into four areas, and the cover pages 1, 2, 3, and 4 may be displayed in the four areas, respectively.

When a user selects the cover page 2 from among the cover pages 1, 2, 3, and 4 displayed on the lock-screen of the device 1000, the device 1000 may be unlocked so that the device 1000 may proceed to the home screen. Also, service pages 2-1, 2-2, 2-3 and 2-4 may be sequentially displayed on the home screen of the device 1000.

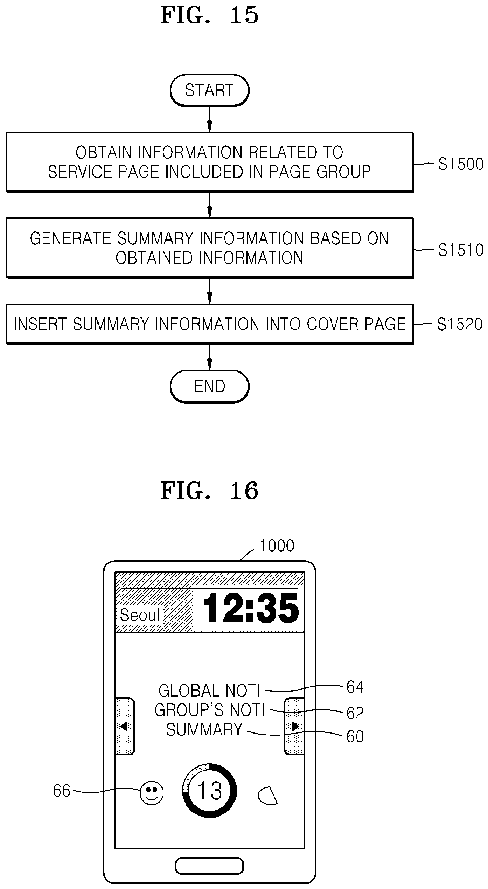

FIG. 15 is a flowchart of a method of generating a cover page, which is performed by the device 1000, according to an exemplary embodiment.

In operation S1500, the device 1000 obtains information related to a service page included in a page group. The device 1000 may extract various types of information from service pages included in the page group.

In more detail, the device 1000 may obtain information about elements that configure the service page from the service page. The information about elements that configure the service page may include an application included in the service page, a particular function of the application that is executed via the service page, and information about a widget displayed on the service page.

Also, the device 1000 may extract notification information that is provided via the service page. When the notification information is received via the application or the widget included in the service page, the device 1000 may use the notification information so as to generate the cover page.

The device 1000 may extract a list of applications that are frequently used by the user via the service page. Also, the device 1000 may determine a current status of the device 1000 and may determine an application related to the current status. Also, the device 1000 may obtain information about a current state of an application that is most-recently used by the user.

Also, the device 1000 may obtain information about an application that is most-recently used by the user from among applications included in the service page, and information about a function of the application that is most-recently used by the user.

In operation S1510, the device 1000 generates summary information based on the obtained information. The device 1000 may generate a title of the cover page and a summary text to be displayed on the cover page, by using the information about the elements that configure the service page. As a non-limiting example, the device 1000 may generate the title and the summary text of the cover page, based on a name of the application included in the service page, a type of the application, and a number of times the application was executed. The device 1000 may set, as the title of the cover page, a category of applications that are frequently used by a user. Also, the device 1000 may generate the summary text to be displayed on the cover page, based on an execution history of the application that was executed in the service page.

Also, the device 1000 may generate an image file by capturing a portion of the service page. Also, the device 1000 may generate a video file indicating an execution result of the application in the service page. Also, the device 1000 may capture sound, an image, and a video that are output via the application in the service page. The device 1000 may extract a message included in the notification information. Also, the device 1000 may count a number of times the notification information is received.

In operation S1520, the device 1000 inserts the summary information into the cover page. By inserting the summary information into the cover page, the summary information may be displayed on the cover page. The device 1000 may insert the title and the summary text of the cover page into the cover page. Also, the device 1000 may insert the image file generated by capturing the portion of the service page, and the video file indicating the execution result of the application into the cover page. Also, the device 1000 may insert the sound, the image, and the video that are output via the application, into the cover page. Also, the device 1000 may insert the message extracted from the notification information, and a number of times the notification information is received, into the cover page.

In this case, a template for generating the cover page may be previously stored in a memory of the device 1000. The device 1000 may extract the pre-stored template from the memory, may insert the summary information into the extracted template, and thus may generate the cover page. As a non-limiting example, the device 1000 may insert the title of the cover page into a title field of the template, and may insert the summary text of the cover page into a summary field of the template. Also, the device 1000 may insert the sound, the image, and the video into a content field of the template. Also, the device 1000 may insert the message extracted from the notification information, and a number of times the notification information is received, into an additional information field of the template.

The cover page may be automatically generated by the device 1000 but one or more exemplary embodiments are not limited thereto. A separate edition tool for generating a cover page may be displayed on a screen of the device 1000, and the device 1000 may generate a cover page, based on a user input by the user who uses the edition tool.

The device 1000 may insert an icon of an application into the cover page, wherein an application used over a preset number of times from among the applications is included in the service page. When the icon of the application included in the cover page is selected, the application of the selected icon may be immediately executed.

The device 1000 may insert an icon of an application into the cover page, wherein an application most-recently used from among the applications is included in the service page. When the icon of the most-recently used application is selected, the device 1000 may allow a most-recently used function to be executed.

The device 1000 may generate a plurality of pieces of summary information according to service pages. In this case, the device 1000 may divide the cover page into a plurality of areas, and may insert the plurality of pieces of summary information, which are generated according to the service pages, into the areas, respectively.

FIG. 16 illustrates an example of a cover page, according to an exemplary embodiment.

Referring to FIG. 16, the cover page may be displayed on a lock-screen of the device 1000. A plurality of pieces of summary information obtained from all service pages included in a page group may be displayed on the cover page of FIG. 16. As a non-limiting example, in a case where the cover page of FIG. 16 is a cover page of a page group I, a summary text for service pages 1-1, 1-2, 1-3, and 1-4 may be displayed at a mark 60, and notification information received from an application included in the service pages 1-1, 1-2, 1-3, and 1-4 may be displayed at a mark 62. Also, notification information that the device 1000 receives regardless of a page group may be displayed at a mark 64. Also, an icon 66 of an application that is frequently used from among applications included in the service pages 1-1, 1-2, 1-3, and 1-4 may be displayed on the cover page.

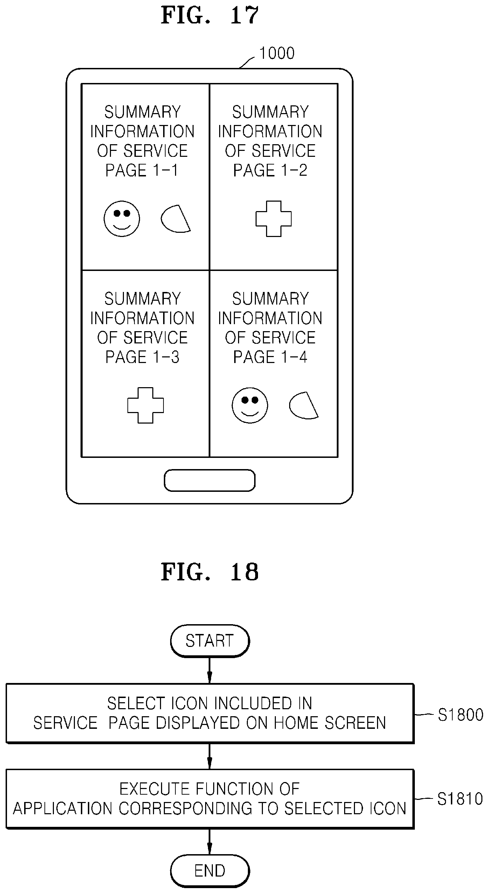

FIG. 17 illustrates an example of a cover page, according to another exemplary embodiment.

Referring to FIG. 17, a plurality of pieces of summary information according to service pages may be displayed on the cover page. As a non-limiting example, the cover page of FIG. 17 may be a cover page of a page group I, and an entire area of the cover page may be divided into four areas. On the divided four areas of the cover page, summary information of a service page 1-1, summary information of a service page 1-2, summary information of a service page 1-3, and summary information of a service page 1-4 may be displayed, respectively. On the divided four areas of the cover page, an icon of a main application included in the service page 1-1, an icon of a main application included in the service page 1-2, an icon of a main application included in the service page 1-3, and an icon of a main application included in the service page 1-4 may be displayed, respectively.

FIG. 18 is a flowchart of a method of executing an application by selecting an icon on a service page, which is performed by the device 1000, according to an exemplary embodiment.

In operation S1800, the device 1000 selects the icon included in the service page that is displayed on a home screen. The icon included in the service page may be an icon for executing an application or a particular function of the application.

In a case where the icon included in the service page functions to execute the application, the icon may be matched with an executable file of the application.

In a case where the icon included in the service page functions to execute the particular function of the application, the icon may be matched with the executable file of the application and a control command. As a non-limiting example, the control command may be a predetermined control command. However, one or more exemplary embodiments are not limited thereto, and thus, in a case where the icon included in the service page functions to execute the particular function of the application, the icon may be matched with a particular functional module of the application. As a non-limiting example, if the application is a music application, the music application may include a functional module for searching for music, a functional module for reproducing music, and a functional module for compiling music. The icon included in the service page may be matched with the functional module for reproducing music.

In operation S1810, the device 1000 executes a function of the application that corresponds to the selected icon. In a case where the icon included in the service page functions to execute the application, the device 1000 may execute the application by executing the executable file of the application that is matched with the icon. In a case where the icon included in the service page functions to execute the particular function of the application, the device 1000 may execute the application by executing the executable file of the application that is matched with the icon, and then may execute the particular function by inputting the control command to the executed application. Also, in a case where the icon included in the service page functions to execute the particular function of the application, the device 1000 may retrieve a particular functional module of the application that is matched with the icon, and may execute the retrieved functional module. As a non-limiting example, if an icon matched with a functional module for reproducing music is selected, the device 1000 may retrieve and execute the functional module for reproducing music, and thus, the user may use only a music reproduction function of a music application.

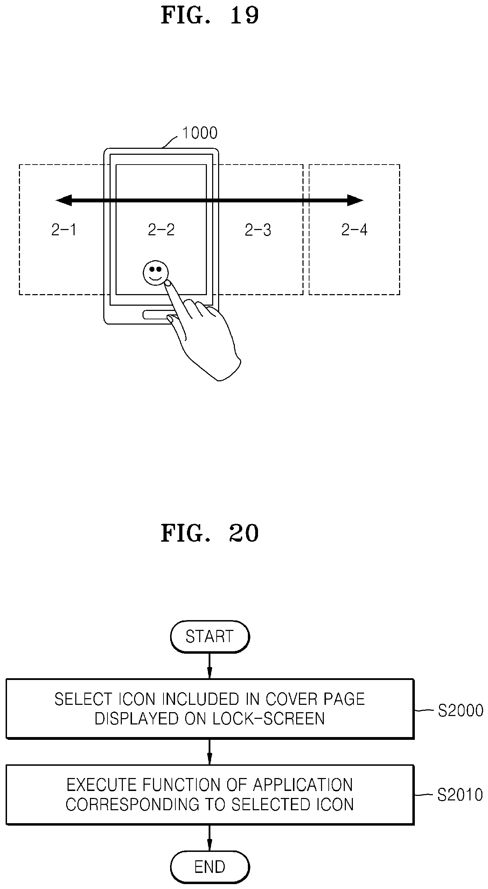

FIG. 19 illustrates an example in which a user of the device 1000 selects an icon on a service page, according to an exemplary embodiment.

Referring to FIG. 19, the service page may be displayed on a home screen of the device 1000, and the icon included in the service page may be selected by the user. An application matched with the icon selected by the user, or a particular function of the application may be executed by the device 1000.

FIG. 20 is a flowchart of a method of executing an application by selecting an icon on a cover page, which is performed by the device 1000, according to an exemplary embodiment.

In operation S2000, the device 1000 selects the icon included in the cover page that is displayed on a lock-screen. The icon included in the cover page may be an icon for executing an application or a particular function of the application.

In a case where the icon included in the cover page functions to execute the application, the icon may be matched with an executable file of the application.

In a case where the icon included in the cover page functions to execute the particular function of the application, the icon may be matched with the executable file of the application and a control command of the particular function. However, one or more exemplary embodiments are not limited thereto, and thus, in a case where the icon included in the cover page functions to execute the particular function of the application, the icon may be matched with a particular functional module of the application. As a non-limiting example, if the application is a music application, the music application may include a functional module for searching for music, a functional module for reproducing music, and a functional module for compiling music. The icon included in the cover page may be matched with the functional module for reproducing music.

In operation S2010, the device 1000 executes a function of the application that corresponds to the selected icon. Since the icon in the cover page is selected, the device 1000 may unlock itself and may execute the function of the application that corresponds to the selected icon.

In a case where the icon included in the cover page functions to execute the application, the device 1000 may execute the application by executing the executable file of the application that is matched with the icon. In a case where the icon included in the cover page functions to execute the particular function of the application, the device 1000 may execute the application by executing the executable file of the application that is matched with the icon, and then may execute the particular function by inputting the control command to the executed application. Also, in a case where the icon included in the cover page functions to execute the particular function of the application, the device 1000 may retrieve a particular functional module of the application that is matched with the icon, and may execute the retrieved functional module. As a non-limiting example, if an icon matched with a functional module for reproducing music is selected, the device 1000 may retrieve and execute the functional module for reproducing music, and thus, the user may use only a music reproduction function of a music application.

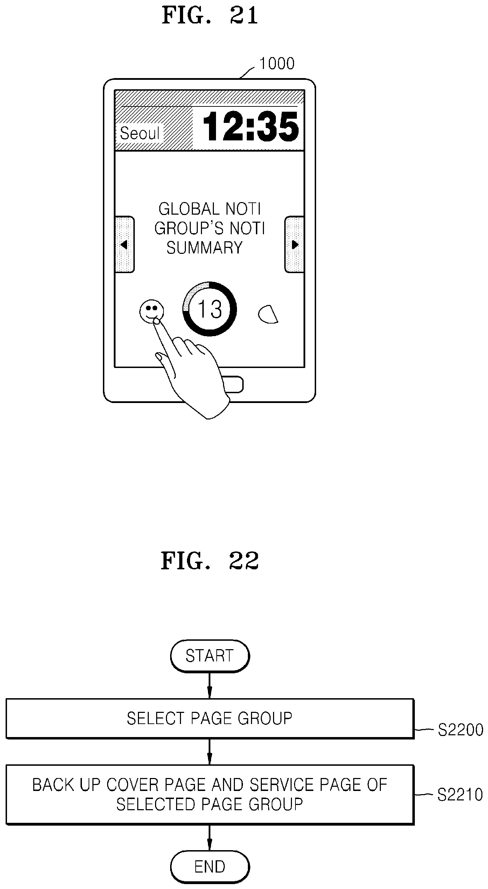

FIG. 21 illustrates an example in which a user of the device 1000 selects an icon on a cover page, according to an exemplary embodiment.

Referring to FIG. 21, the cover page may be displayed on a lock-screen of the device 1000, and the icon included in the cover page may be selected by the user. An application matched with the icon selected by the user, or a particular function of the application may be executed by the device 1000.

FIG. 22 is a flowchart of a method of backing up service pages, according to an exemplary embodiment.

In operation S2200, the device 1000 selects a page group. The device 1000 may select the page group to be backed up, based on a user input.

In operation S2210, the device 1000 backs up a cover page and a service page of the selected page group. The device 1000 may back up the cover page and the service page of the selected page group to a separate server (not shown) or another device (not shown) of a user. Also, the device 1000 may back up an executable file of an application included in the service page of the selected page group, an execution history of the application, and data stored in the device 1000 via the service page. The device 1000 may compress data to be backed up, and may package the compressed data.

Also, the device 1000 may delete an application from the device 1000, wherein the application is from among applications included in the service page of the selected page group and is not included in a service page of another page group.

Thus, the device 1000 may efficiently manage resources of the device 1000. Also, the device 1000 may restore the cover page and the service page of the page group which are backed up in the server, and may effectively delete or restore the application installed in the device 1000.

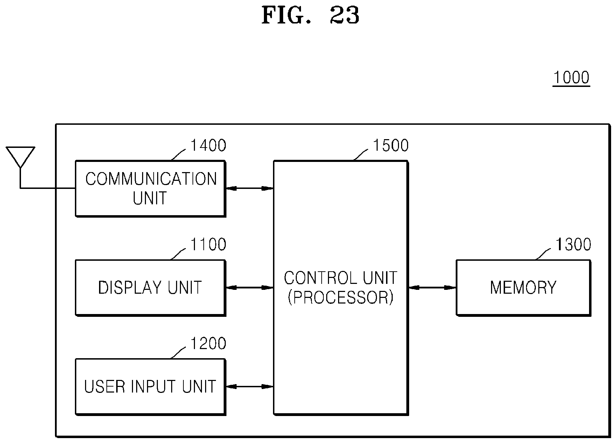

FIG. 23 is a block diagram of the device 1000, according to an exemplary embodiment.

Referring to FIG. 23, the device 1000 may include a display unit 1100, a user input unit 1200, a memory 1300, a communication unit 1400, and a control unit 1500, i.e. a controller.

The display unit 1100 displays a cover page, a service page, and an application page on a screen of the device 1000. The display unit 1100 may be controlled by the control unit 1500 to be described later below and thus may display the cover page on a lock-screen of the device 1000. Also, the display unit 1100 may be controlled by the control unit 1500 and thus may display the service page on a home screen of the device 1000. Also, the display unit 1100 may be controlled by the control unit 1500 and thus may display the application page on an application screen of the device 1000. The display unit 1100 may be controlled by the control unit 1500 and thus may display an execution result of an application that was executed in the device 1000. The display unit 1100 may include, but is not limited to, a touch screen.

The user input unit 1200 receives a user input with respect to the device 1000. The user input unit 1200 may receive a user input with respect to the cover page displayed on the lock-screen, a user input with respect to the service page displayed on the home screen, and a user input with respect to the application page displayed on the application screen. The user input unit 1200 may include, but is not limited to, a touch screen.

The memory 1300 stores one or more pieces of information that the device 1000 uses so as to generate and display a page group, a cover page of the page group, and service pages included in the page group. The memory 1300 may store a page group generated by the device 1000, a cover page of the page group, and service pages included in the page group.

The communication unit 1400 performs communication with the service provider 2000, the application providing server 3000, the page providing server 4000, and a server (not shown), and exchanges data with the service provider 2000, the application providing server 3000, the page providing server 4000, and the server.

The control unit 1500 (hereinafter, also referred as 'the processor 1500' or a controller 1500) controls the operations of the device 1000, i.e., the control unit 1500 controls the display unit 1100, the user input unit 1200, the memory 1300, and the communication unit 1400, so that the control unit 1500 controls the device 1000 to generate and display the page group, the cover page of the page group, and the service pages included in the page group.

The control unit 1500 may generate page groups of service pages. The control unit 1500 may generate page groups by grouping service pages having similar attributes. The control unit 1500 may generate page groups by grouping service pages, which are received from service providers, according to the service providers. In more detail, the control unit 1500 may control the communication unit 1400 and thus may transmit device information to the service provider 2000 and may receive a plurality of service pages for using a service of the service provider 2000. Each of the service pages provided by the service provider 2000 may include an execution icon of the application for using the service of the service provider 2000, and link information for downloading the application for using the service of the service provider 2000. Also, the control unit 1500 may group the service pages received from the service providers and may match the grouped service pages and ID values of the service providers. Also, the control unit 1500 may download the application by using the link information for downloading the application, which is included in the service page, and may install the application. The control unit 1500 may include an icon of the installed application in the service page.

The control unit 1500 may generate a page group by grouping service pages that are supported by a same launcher. When a user selects a user-desired application and at least one function of the selected user-desired application and includes objects for executing the selected user-desired application and the selected function in the service page, the control unit 1500 may generate the service page.

The control unit 1500 may control the communication unit 1400 and thus may obtain from the page providing server 4000 a template that belongs to a category, and then may generate a service page by editing the template. The control unit 1500 may group the generated service pages according to categories.

The control unit 1500 may generate cover pages according to page groups, respectively. The control unit 1500 may extract various types of information from service pages included in each of the page groups. The control unit 1500 may obtain information about elements that configure a service page from the service page. The information about elements that configure the service page may include an application included in the service page, a particular function of the application that is executed via the service page, and information about a widget displayed on the service page.

The control unit 1500 may obtain notification information that is provided via the service page. When the notification information is received via the application or the widget included in the service page, the control unit 1500 may use the notification information so as to generate the cover page.

The control unit 1500 may extract a list of applications that are frequently used by the user via the service page. Also, the control unit 1500 may determine a current status of the device 1000 and may determine an application related to the current status. The control unit 1500 may obtain information about a current state of an application most-recently used by the user.

The control unit 1500 may generate summary information based on the extracted information. The control unit 1500 may generate a title of the cover page and a summary text to be displayed on the cover page, by using the information about the elements that configure the service page. As a non-limiting example, the control unit 1500 may generate the title and the summary text of the cover page, based on a name of the application included in the service page, a type of the application, and a number of times the application was executed. The control unit 1500 may set, as the title of the cover page, a category of applications that are frequently used by the user. Also, the control unit 1500 may generate the summary text to be displayed on the cover page, based on an execution history of the application that was executed in the service page.

The control unit 1500 may generate an image file by capturing a portion of the service page. Also, the control unit 1500 may generate a video file indicating an execution result of the application in the service page. Also, the control unit 1500 may capture sound, an image, and a video that are output via the application in the service page. The control unit 1500 may extract a message included in the notification information. Also, the control unit 1500 may count a number of times the notification information is received.

The control unit 1500 may insert the summary information into the cover page. The control unit 1500 may insert the title and the summary text of the cover page into the cover page. Also, the control unit 1500 may insert the image file generated by capturing the portion of the service page, and the video file indicating the execution result of the application, into the cover page. Also, the control unit 1500 may insert the sound, the image, and the video that are output via the application, into the cover page. Also, the control unit 1500 may insert the message extracted from the notification information, and a number of times the notification information is received, into the cover page.

In this case, a template for generating the cover page may be previously stored in the memory 1300 of the device 1000. The control unit 1500 may extract the pre-stored template from the memory 1300, may insert the summary information into the extracted template, and thus may generate the cover page.

The control unit 1500 selects a page group from among the generated page groups. The control unit 1500 may display a list of the generated page groups and may select the page group, based on a user input. The control unit 1500 may display cover pages of the generated page groups on the lock-screen, and may select the page group, based on the user input with respect to the cover pages.

Also, the control unit 1500 displays service pages, which are included in the page group selected by the user, on the screen of the device 1000. The control unit 1500 may set the service pages included in the selected page group, as target service pages to be displayed on the home screen of the device 1000. Then, the control unit 1500 may display the service pages included in the selected page group on the home screen of the device 1000. The control unit 1500 may not display service pages included in non-selected page groups, and may display only the service pages included in the selected page group. Also, the control unit 1500 may display the service pages included in the selected page group on the home screen, and based on a swipe input by the user, the control unit 1500 may sequentially display service pages one-by-one on the home screen.

Also, when an icon included in the service page displayed on the home screen is selected, the control unit 1500 may execute a function of the application that corresponds to the selected icon. In a case where an icon included in the service page functions to execute an application, the control unit 1500 may execute the application by executing an executable file of the application that is matched with the icon. In a case where the icon included in the service page functions to execute a particular function of the application, the control unit 1500 may execute the application by executing the executable file of the application that is matched with the icon, and then may execute the particular function by inputting a control command to the executed application. Also, in a case where the icon included in the service page functions to execute the particular function of the application, the control unit 1500 may retrieve a particular functional module of the application that is matched with the icon, and may execute the retrieved functional module. As a non-limiting example, if an icon matched with a functional module for reproducing music is selected, the control unit 1500 may retrieve and execute the functional module for reproducing music, and thus may allow the user to use only a music reproduction function of a music application.

Also, when an icon included in the cover page displayed on the lock-screen is selected, the control unit 1500 may execute a function of the application that corresponds to the selected icon. In a case where an icon included in the cover page functions to execute an application, the control unit 1500 may execute the application by executing an executable file of the application that is matched with the icon. In a case where the icon included in the cover page functions to execute a particular function of the application, the control unit 1500 may execute the application by executing the executable file of the application that is matched with the icon, and then may execute the particular function by inputting a control command to the executed application. Also, in a case where the icon included in the cover page functions to execute the particular function of the application, the control unit 1500 may retrieve a particular functional module of the application that is matched with the icon, and may execute the retrieved functional module.

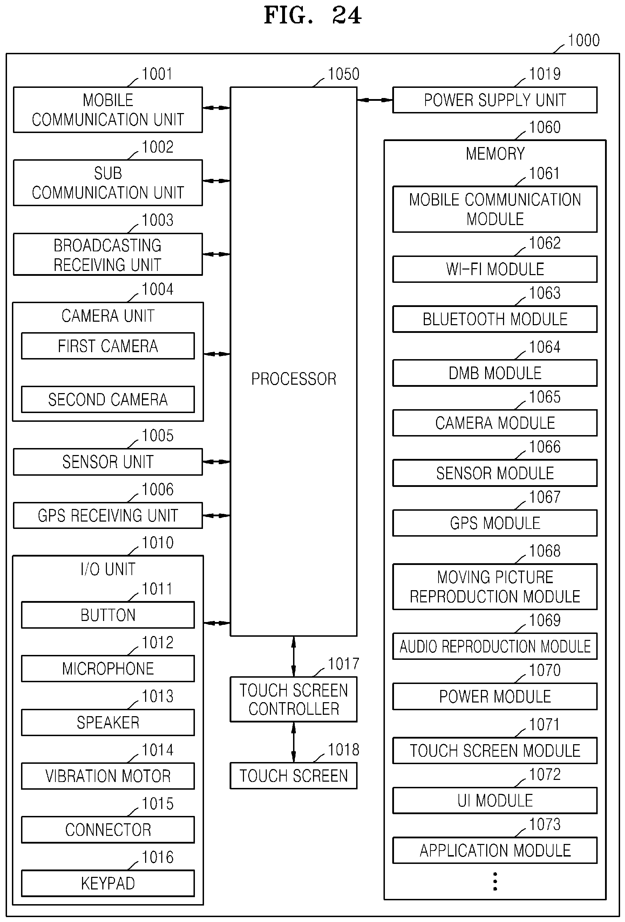

FIG. 24 is a block diagram of the device 1000, according to another exemplary embodiment. As illustrated in FIG. 24, as a non-limiting example, the device 1000 may be a portable terminal.

A mobile communication unit 1001 performs a call set-up, data communication, or the like with a base station via a cellular network such as a third generation (3G)/ fourth generation (4G) network. A sub-communication unit 1002 performs a function for short-distance communication such as Bluetooth or near field communication (NFC). A broadcasting unit 1003 receives a broadcast signal, such as a Digital Multimedia Broadcasting (DMB) signal.

A camera unit 1004 includes a lens and optical elements used to capture a still image or a moving picture. The camera unit 1004 may include a first camera and a second camera. However, this is only an example, and the camera unit 1004 may include only a single camera or three or more cameras.

A sensor unit 1005 may include a gravity sensor (not shown) for sensing motion of the host device 1000, a luminance sensor (not shown) for sensing intensity of light, a proximity sensor (not shown) for sensing proximity of a person, a motion sensor (not shown) for sensing motion of a person, or the like.

A global positioning system (GPS) receiving unit 1006 receives a GPS signal from a satellite. By using the GPS signal, various services may be provided to a user.

An input/output (I/O) unit 1010 provides an interface for an external device or a person, and includes a button 1011, a microphone 1012, a speaker 1013, a vibration motor 1014, a connector 1015, and a keypad 1016.

A touch screen 1018 receives a touch input by the user. A touch screen controller 1017 transfers, to a control unit (also referred as the processor or controller) 1050, a touch input that is input via the touch screen 1018. A power supply unit 1019 is connected to a battery or an external power source so as to supply power for the device.

The control unit 1050 may generate and may display service pages and a cover page, and may generate a page group, by executing programs stored in a memory 1060.

The programs stored in the memory 1060 may be divided into a plurality of modules according to their functions. That is, the programs stored in the memory 1060 may be divided into a mobile communication module 1061, a Wi-Fi module 1062, a Bluetooth module 1063, a DMB module 1064, a camera module 1065, a sensor module 1066, a GPS module 1067, a moving picture reproduction module 1068, an audio reproduction module 1069, a power module 1070, a touch screen module 1071, a user interface (UI) module 1072, an application module 1073, or the like.

Functions of the modules may be intuitionally deduced from their respective titles, by one of ordinary skill in the art, and thus, only the application module 1073 is described below. The application module 1073 may generate page groups of service pages. The application module 1073 may generate page groups by grouping service pages having similar attributes. The application module 1073 may generate page groups by grouping service pages, which are received from service providers, according to the service providers. Also, the application module 1073 may generate a page group by grouping service pages that are supported by a same launcher. When a user selects a user-desired application and at least one function of the selected user-desired application and includes objects for executing the selected user-desired application in a service page, the application module 1073 may generate the service page.

The application module 1073 may obtain from the page providing server 4000 a template that belongs to a category, and may generate a service page by editing the template. The application module 1073 may group the generated service pages, according to categories.

The application module 1073 may generate cover pages according to page groups, respectively. The application module 1073 may extract various types of information from service pages included in each of the page groups. The application module 1073 may generate summary information based on the extracted information. The application module 1073 may insert the summary information into the cover page. In this case, a template for generating the cover page may be previously stored in the memory 1060 of the device 1000. The application module 1073 may extract the pre-stored template from the memory 1060, may insert the summary information into the extracted template, and thus may generate the cover page.

Also, the application module 1073 selects a page group from among the generated page groups. The application module 1073 may display a list of the generated page groups on the touch screen 1018 and may select the page group, based on a user input. The application module 1073 may display cover pages of the generated page groups on the lock-screen, and may select the page group, based on the user input with respect to the cover pages.

The application module 1073 may set the service pages included in the selected page group, as target service pages to be displayed on the home screen of the device 1000. The application module 1073 may display on the touch screen 1018 of the device 1000 the service pages included in the selected page group that is selected by the user. The application module 1073 may display the service pages included in the selected page group on the home screen of the device 1000. The application module 1073 may not display service pages included in non-selected page groups, and may display only the service pages included in the selected page group.

Also, when an icon included in the service page displayed on the home screen is selected, the application module 1073 may execute a function of the application that corresponds to the selected icon. In a case where an icon included in the service page functions to execute an application, the application module 1073 may execute the application by executing an executable file of the application that is matched with the icon. In a case where the icon included in the service page functions to execute a particular function of the application, the application module 1073 may execute the application by executing the executable file of the application that is matched with the icon, and then may execute the particular function by inputting a control command to the executed application. Also, in a case where the icon included in the service page functions to execute the particular function of the application, the application module 1073 may retrieve a particular functional module of the application that is matched with the icon, and may execute the retrieved functional module. As a non-limiting example, if an icon matched with a functional module for reproducing music is selected, the application module 1073 may retrieve and execute the functional module for reproducing music, and thus, the user may use only a music reproduction function of a music application.

Also, when an icon included in the cover page displayed on the lock-screen is selected, the application module 1073 may execute a function of the application that corresponds to the selected icon.

It will be appreciated that embodiments can be realized in the form of hardware, software or a combination of hardware and software.

The one or more exemplary embodiments may be embodied as non-transitory computer readable code/instructions on a recording medium, e.g., a program module to be executed in computers, which include computer-readable commands. The computer storage medium may include any usable medium that may be accessed by computers, volatile and non-volatile medium, and detachable and non-detachable medium. Also, the computer storage medium may include a computer storage medium and a communication medium. The computer storage medium includes all volatile and non-volatile media, and detachable and non-detachable media which are designed to store information including computer readable commands, data structures, program modules or other data. The communication medium includes computer-readable commands, a data structure, a program module, and other transmission mechanisms, and includes other information transmission mediums.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

It should be understood that the exemplary embodiments described herein should be considered in a descriptive sense only and not for purposes of limitation. Descriptions of features or aspects within each exemplary embodiment should typically be considered as available for other similar features or aspects in other exemplary embodiments. As a non-limiting example, configuring elements that are singular forms may be executed in a distributed fashion, and also, configuring elements that are distributed may be combined and then executed.

While one or more exemplary embodiments have been particularly shown and described with reference accompanying drawings, it will be understood by those of ordinary skill in the art that various changes in form and details may be made therein without departing from the scope as defined by the following claims.

## Claims

1. A method of displaying executable objects on a screen of a device, the method comprising:
generating a plurality of page groups (S400) by grouping service pages, wherein each service page includes a plurality of objects selected from: objects for executing functions of a device; objects for executing applications installed in the device and objects for executing functions of applications installed in the device; and
in response to a page group being selected from the plurality of page groups (S410), displaying the service pages (S420) of the selected page group on a home screen of the device,
the method **characterized by** comprising:
displaying at least one cover page from amongst a plurality of cover pages on a lock-screen of the device, wherein the plurality of respective cover pages comprises a plurality of pieces of summary information about respective page groups from the plurality of page groups;
receiving a selection of a given cover page; and
in response to the given cover page being selected from the at least one cover page displayed on the lock-screen, displaying the service pages of a respective page group that corresponds to the selected cover page on the home screen of the device.

2. The method of claim 1, wherein, in response to the page group being selected from the plurality of page groups, only service pages that are of the selected page group are displayed on the home screen.

3. The method of claim 1 or claim 2, wherein the service pages of one page group from the plurality of page groups are configured to be used by a user of the device in the use of a service provided from a same service provider.

4. The method of any one of claims 1 to 3, wherein the service pages of one page group from the plurality of page groups are configured to be supported by a same launcher.

5. The method of claim 1, wherein the plurality of pieces of summary information are generated based on a plurality of pieces of information about the applications of the service pages of the respective page groups, and a plurality of pieces of notification information generated by the applications of the service pages of the respective page groups.

6. The method of claim 5, wherein the information about the applications of the service pages of the respective page groups includes information concerning applications of the service pages in the respective page group that are most frequently used.

7. The method of claim 1, wherein the selected cover page is configured to display an icon of an application comprised in one of the service pages of the respective page group that corresponds to the selected cover page, and
wherein, in response to the icon of the application being selected, the method further comprises executing the application that corresponds to the icon.

8. The method of claim 7, wherein the executing of the application comprises executing at least one function of the application.

9. The method of any one of the preceding claims, further comprising, in response to the page group being selected from the plurality of page groups, installing an application related to the selected page group on the device, and
wherein an icon for executing the installed application is included in a service page of the selected page group.

10. A device (1000) configured to display executable objects, the device comprising:
a display (1100) configured to present screens; and
a controller (1500) configured to:
generate a plurality of page groups by grouping service pages, wherein each service page includes a plurality of objects selected from: objects for executing functions of a device; objects for executing applications installed in the device and objects for executing functions of applications installed in the device, and
in response to a page group being selected from the plurality of page groups, to control the display (1100) to display the service pages of the selected page group on a home screen of the device,
wherein the controller (1500) is **characterized by** being configured to:
display at least one cover page from amongst a plurality of cover pages on a lock-screen of the device, wherein the plurality of respective cover pages comprising a plurality of pieces of summary information about respective page groups from the plurality of page groups;
receive a selection of a given cover page; and
in response to the given cover page being selected from the at least one cover page displayed on the lock-screen, display the service pages of a respective page group that corresponds to the selected cover page on the home screen of the device.

11. The device of claim 10, wherein, in response to the page group being selected from the plurality of page groups, only service pages that are of the selected page group are displayed on the home screen.

12. The device of claim 10 or claim 11, wherein the service pages of one page group from the plurality of page groups are configured to be supported by a same launcher.

13. A non-transitory computer-readable recording medium having recorded thereon a program, wherein the program, when executed in a computing device, performs the method of any one of claims 1 to 9.

## Patentansprüche

1. Verfahren zum Anzeigen von ausführbaren Objekten auf einem Bildschirm einer Einheit, wobei das Verfahren aufweist:
ein Generieren einer Mehrzahl von Seitengruppen (S400) durch Gruppieren von Dienstseiten,
wobei jede Dienstseite eine Mehrzahl von Objekten enthält, die ausgewählt wurden aus: Objekten zum Ausführen von Funktionen einer Einheit; Objekten zum Ausführen von Anwendungen, die in der Einheit installiert sind, und Objekten zum Ausführen von Funktionen von Anwendungen, die in der Einheit installiert sind;
und in Reaktion auf eine Seitengruppe, die aus der Mehrzahl von Seitengruppen ausgewählt wurde (S410), ein Anzeigen der Dienstseiten (S420) der ausgewählten Seitengruppe auf einer Startseite der Einheit, wobei das Verfahren **dadurch gekennzeichnet ist, dass** es aufweist:
ein Anzeigen von mindestens einer Titelseite aus einer Mehrzahl von Titelseiten auf einem Sperrbildschirm der Einheit, wobei die Mehrzahl von jeweiligen Titelseiten eine Mehrzahl von Teilen von Zusammenfassungsinformationen über jeweilige Seitengruppen aus der Mehrzahl von Seitengruppen aufweist;
ein Empfangen einer Auswahl einer bestimmten Titelseite;
und in Reaktion auf die bestimmte Titelseite, die aus der mindestens einen auf dem Sperrbildschirm angezeigten Titelseite ausgewählt wurde, ein Anzeigen der Dienstseiten einer jeweiligen Seitengruppe, die der ausgewählten Titelseite auf der Startseite der Einheit entspricht.

2. Verfahren nach Anspruch 1, wobei in Reaktion auf die Seitengruppe, die aus der Mehrzahl von Seitengruppen ausgewählt wurde, nur Dienstseiten auf der Startseite angezeigt werden, die aus der ausgewählten Seitengruppe stammen.

3. Verfahren nach Anspruch 1 oder Anspruch 2, wobei die Dienstseiten von einer Seitengruppe aus der Mehrzahl von Seitengruppen konfiguriert sind, um von einem Benutzer der Einheit bei der Verwendung eines Diensts verwendet zu werden, der von einem selben Dienstanbieter bereitgestellt wird.

4. Verfahren nach einem der Ansprüche 1 bis 3, wobei die Dienstseiten einer Seitengruppe aus der Mehrzahl von Seitengruppe konfiguriert sind, um von einem selben Startprogramm unterstützt zu werden.

5. Verfahren nach Anspruch 1, wobei die Mehrzahl von Teilen von Zusammenfassungsinformationen auf Grundlage einer Mehrzahl von Teilen von Informationen über die Anwendungen der Dienstseiten der jeweiligen Seitengruppen und einer Mehrzahl von Teilen von Benachrichtigungsinformationen generiert werden, die durch die Anwendungen der Dienstseiten der jeweiligen Seitengruppen generiert werden.

6. Verfahren nach Anspruch 5, wobei die Informationen über die Anwendungen der Dienstseiten der jeweiligen Seitengruppen Informationen enthalten, die Anwendungen der Dienstseiten in der jeweiligen Seitengruppe betreffen, die am häufigsten verwendet werden.

7. Verfahren nach Anspruch 1, wobei die ausgewählte Titelseite konfiguriert ist, um ein Symbol einer Anwendung anzuzeigen, die in einer der Dienstseiten der jeweiligen Seitengruppe enthalten ist, die der ausgewählten Titelseite entspricht, und wobei in Reaktion auf die Auswahl des Symbols der Anwendung das Verfahren ferner ein Ausführen der Anwendung aufweist, die dem Symbol entspricht.

8. Verfahren nach Anspruch 7, wobei das Ausführen der Anwendung ein Ausführen von mindestens einer Funktion der Anwendung aufweist.

9. Verfahren nach einem der vorhergehenden Ansprüche, ferner aufweisend, in Reaktion auf die Auswahl der Seitengruppe aus der Mehrzahl von Seitengruppen, ein Installieren einer Anwendung, die zu der ausgewählten Seitengruppe in der Einheit in Beziehung steht, und wobei ein Symbol zum Ausführen der installierten Anwendung in einer Dienstseite der ausgewählten Seitengruppe enthalten ist.

10. Einheit (1000), die konfiguriert ist, um ausführbare Objekte anzuzeigen, wobei die Einheit aufweist:
eine Anzeige (1100), die konfiguriert ist, um Bildschirme darzustellen;
und einen Controller (1500), der konfiguriert ist zum:
Generieren einer Mehrzahl von Seitengruppen durch Gruppieren von Dienstseiten, wobei jede Dienstseite eine Mehrzahl von Objekten enthält, die ausgewählt wurden aus: Objekten zum Ausführen von Funktionen einer Einheit; Objekten zum Ausführen von Anwendungen, die in der Einheit installiert sind, und Objekten zum Ausführen von Funktionen von Anwendungen, die in der Einheit installiert sind, und in Reaktion auf eine aus der Mehrzahl von Seitengruppen ausgewählte Seitengruppe zum Steuern der Anzeige (1100) zum Anzeigen der Dienstseiten der ausgewählten Seitengruppe auf einer Startseite der Einheit, wobei der Controller (1500) **dadurch gekennzeichnet ist, dass** er konfiguriert ist zum:
Anzeigen von mindestens einer Titelseite aus einer Mehrzahl von Titelseiten auf einem Sperrbildschirm der Einheit, wobei die Mehrzahl von jeweiligen Titelseiten eine Mehrzahl von Teilen von Zusammenfassungsinformationen über jeweilige Seitengruppen aus der Mehrzahl von Seitengruppen aufweist;
Empfangen einer Auswahl einer bestimmten Titelseite;
und in Reaktion auf die bestimmte Titelseite, die aus der mindestens einen auf dem Sperrbildschirm angezeigten Titelseite ausgewählt wurde, ein Anzeigen der Dienstseiten einer jeweiligen Seitengruppe, die der ausgewählten Titelseite auf der Startseite der Einheit entspricht.

11. Einheit nach Anspruch 10, wobei in Reaktion auf die Seitengruppe, die aus der Mehrzahl von Seitengruppen ausgewählt wurde, nur Dienstseiten auf der Startseite angezeigt werden, die aus der ausgewählten Seitengruppe stammen.

12. Einheit nach Anspruch 10 oder Anspruch 11, wobei die Dienstseiten einer Seitengruppe aus der Mehrzahl von Seitengruppe konfiguriert sind, um von einem selben Startprogramm unterstützt zu werden.

13. Nicht flüchtiges, von einem Computer lesbares Aufzeichnungsmedium, auf dem ein Programm aufgezeichnet ist, wobei das Programm, wenn es in einer Datenverarbeitungseinheit ausgeführt wird, das Verfahren nach einem der Ansprüche 1 bis 9 ausführt.

## Revendications

1. Méthode d'affichage d'objets exécutables sur un écran d'un appareil, la méthode comprenant :
la génération d'une pluralité de groupes de pages (S400) en groupant des pages de service, chaque page de service comprenant une pluralité d'objets sélectionnés parmi : des objets pour l'exécution de fonctions d'un appareil ; des objets pour l'exécution d'applications installées dans l'appareil ;
et des objets pour l'exécution de fonctions d'applications installées dans l'appareil ;
et, en réponse à la sélection d'un groupe de page parmi la pluralité de groupes de pages (S410), l'affichage de pages de service (S420) du groupe de page sélectionné sur un écran d'accueil de l'appareil, la méthode étant **caractérisée par** ce qu'elle comprend :
l'affichage d'au moins une page de couverture parmi une pluralité de pages de couverture sur un écran de verrouillage de l'appareil, la pluralité de pages de couverture respectives comprenant une pluralité d'informations sommaires sur des groupes de pages respectifs parmi la pluralité de groupes de pages ;
la réception d'une sélection d'une page de couverture donnée ;
et, en réponse à la sélection de la page de couverture donnée parmi l'au moins une page de couverture affichée sur l'écran de verrouillage, l'affichage des pages de service d'un groupe de pages respectif correspondant à la page de couverture sélectionnée sur l'écran d'accueil de l'appareil.

2. Méthode selon la revendication 1, dans laquelle, en réponse à la sélection du groupe de pages parmi la pluralité de groupes de pages, seules des pages de service qui appartiennent au groupe de pages sélectionné s'affichent sur l'écran d'accueil.

3. Méthode selon la revendication 1 ou la revendication 2, les pages de service d'un groupe de pages de la pluralité de groupes de pages étant configurées pour être utilisées par un utilisateur de l'appareil dans l'utilisation d'un service assuré par le même prestataire de services.

4. Méthode selon une quelconque des revendication 1 à 3, les pages de service d'un groupe de pages de la pluralité de groupes de page étant configurées pour être supportées par le même dispositif de lancement.

5. Méthode selon la revendication 1, la pluralité des informations sommaires étant générées sur la base d'une pluralité d'informations concernant les applications des pages de service des groupes de pages respectifs, et d'une pluralité d'informations de notification générées par les applications des pages de service des groupes de pages respectifs.

6. Méthode selon la revendication 5, les informations sur les applications des pages de service des groupes de pages respectifs comprenant des informations concernant des applications sur les pages de service dans le groupe de pages respectif le plus fréquemment utilisé.

7. Méthode selon la revendication 1, la page de couverture sélectionnée étant configurée pour afficher une icône d'une application comprise dans une des pages de service du groupe de pages respectif correspondant à la page de couverture sélectionnée, et, en réponse à la sélection de l'icône de l'application, la méthode comprenant en outre l'exécution de l'application correspondant à l'icône.

8. Méthode selon la revendication 7, l'exécution de l'application comprenant l'exécution d'au moins une fonction de l'application.

9. Méthode selon une quelconque des revendications précédentes, comprenant en outre, en réponse à la sélection du groupe de pages parmi la pluralité de groupes de pages, l'installation d'une application relative au groupe de pages sélectionné sur l'appareil, et une icône pour l'exécution de l'application installée étant incorporée dans une page de service du groupe de pages sélectionné.

10. Appareil (1000) configuré pour afficher des objets exécutables, l'appareil comprenant :
un dispositif d'affichage (1100) configuré pour présenter des écrans ; et
un contrôleur (1500) configuré pour :
générer une pluralité de groupes de pages en groupant des pages de service, chaque page de service comprenant une pluralité d'objets sélectionnés parmi les suivants : des objets pour l'exécution de fonctions d'un appareil ; des objets pour l'exécution d'applications installées dans l'appareil, et des objets pour l'exécution de fonctions d'applications installées dans l'appareil, et, en réponse à la sélection d'un groupe de pages parmi la pluralité de groupes de pages, pour commander au dispositif d'affichage (1100) d'afficher les pages de service du groupe de pages sélectionné sur un écran d'accueil de l'appareil, le contrôleur (1500) étant **caractérisé par le fait qu'**il est configuré pour :
afficher au moins une page de couverture parmi la pluralité de pages de couverture sur un écran de verrouillage de l'appareil, la pluralité de pages de couverture respectives comprenant une pluralité d'informations sommaires sur des groupes de pages respectifs parmi la pluralité de groupes de pages ;
recevoir une sélection d'une page de couverture donnée ;
et, en réponse à la sélection de la page de couverture donnée parmi l'au moins une page de couverture affichée sur l'écran de verrouillage, pour afficher les pages de service d'un groupe de pages respectif correspondant à la page de couverture sélectionnée sur l'écran d'accueil de l'appareil.

11. Appareil selon la revendication 10, dans lequel, en réponse à la sélection du groupe de pages parmi la pluralité de groupes de pages, seules des pages de service qui appartiennent au groupe de pages sélectionné s'affichent sur l'écran d'accueil.

12. Appareil selon la revendication 10 ou la revendication 11, dans lequel les pages de service d'un groupe de pages de la pluralité de groupes de pages sont configurées pour être supportées par le même dispositif de lancement.

13. Support d'enregistrement non transitoire lisible par ordinateur sur lequel est enregistré un programme, lequel programme effectuant, lors de son exécution dans un appareil informatique, la méthode d'une quelconque des revendications 1 à 9.
